# EUROPÄISCHE PATENTSCHRIFT

(11) **EP 0 938 618 B1**
(45) Veröffentlichungstag und Bekanntmachung des Hinweises auf die Patenterteilung: **04.04.2001**
(21) Anmeldenummer: 97950018.8
(22) Anmeldetag: 22.10.1997
(51) Int. Cl.: E05D 11/00

(54) **KRAFTFAHRZEUG MIT EINER SICHERHEITSKAROSSERIE**
MOTOR VEHICLE WITH SAFETY BODYWORK
VEHICULE A MOTEUR POURVU D'UNE CARROSSERIE DE SECURITE

(30) Priorität: 14.11.1996 DE 19646999
(43) Veröffentlichungstag der Anmeldung: 01.09.1999
(73) Patentinhaber: Volkswagen Aktiengesellschaft, 38436 Wolfsburg (DE)
(72) Erfinder: FRIEDEWALD, Klaus, D-38104 Braunschweig (DE); HEUMANN, Gert, D-38108 Braunschweig (DE); ENSSLEN, Arnold, D-38446 Wolfsburg (DE)
(86) Internationale Anmeldenummer: EP9705833
(87) Internationale Veröffentlichungsnummer: WO9821433

(56) Entgegenhaltungen:
- FR-A- 2 291 885
- GB-A- 1 444 790
- GB-A- 2 144 797

## Beschreibung

Die Erfindung betrifft ein Kraftfahrzeug gemäß den Oberbegriffen der selbständigen Patentansprüche.

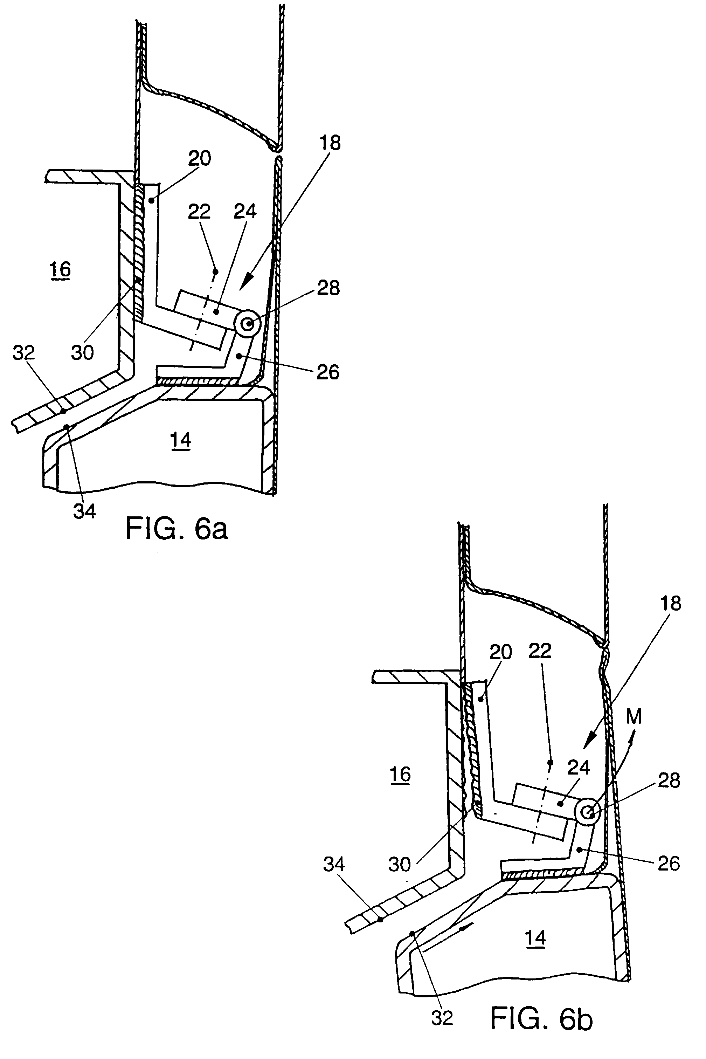

Bei Kraftfahrzeugen mit Sicherheitskarosserien, wie sie seit einigen Jahrzehnten im Einsatz sind, wird versucht, den Fahrgastraum auch bei schweren Unfällen weitgehend frei von Verformungen zu halten. Um dieses Ziel bei einem Frontal- oder Offset-Aufprall des Kraftfahrzeugs zu erreichen, ist bei diesen bekannten, im Einsatz befindlichen Kraftfahrzeugen die Frontpartie so ausgestaltet, daß sie sich beim Aufprall unter Umwandlung von Bewegungsenergie in Formänderungsarbeit verformt und ein Teil der Aufprallkräfte über Längsträger und die versteiften Seitenwände der Fahrgastzelle nach hinten in weiter entfernte Bereiche des Kraftfahrzeugs abgeleitet wird. Dort werden sie großflächig und unter plastischer Formänderung des Karosseriematerials aufgenommen. Dies ist jedoch nur dann in ausreichender Weise gewährleistet, wenn die Seitentüren beim Aufprall geschlossen bleiben, da sonst nur ein Teil der auf eine vordere Türsäule einwirkenden Aufprallkräfte oberhalb und unterhalb der Tür in eine hinter dieser angeordnete Türsäule und von dort aus weitergeleitet werden kann. Mögliche Schwachpunkte der Türen in dieser Hinsicht liegen zum einen im Bereich des Türschlosses und zum anderen im Bereich der Türscharniere, die gewöhnlich im Bereich ihrer Befestigung deformieren oder an der Türsäule ausreißen, wenn die Tür bei einem Frontal- oder Offset-Aufprall infolge ihrer Massenträgheit nach vom gedrückt wird und sich gegebenenfalls gleichzeitig die Türsäule infolge der Aufprallkräfte entgegen der Fahrtrichtung nach hinten verformt. Aufgrund der Ausgestaltung herkömmlicher Türscharniere (beispielhaft in den Figuren 6a und 6b veranschaulicht) wird bei einer Deformation der Türsäule oder einem Ausreißen eines mit der Türsäule verschweißten Scharnierhalteteils zum einen die Kraftübertragung über das Türscharnier selbst unterbrochen und zum anderen der mit dem Türschamier verbundene vordere Teil der Tür nach außen gedrückt, weil die zwischen dem Schamierhalteteil und der Türsäule angeordnete Schweißnaht, beginnend an ihrem hinteren Ende, einreißt und das Scharnierhalteteil dabei nach außen gebogen wird. Dies führt dazu, daß das vordere Ende der Tür in seitlicher Richtung weg von der Längsmittelachse des Kraftfahrzeugs aus der Türöffnung ausbricht, so daß es sich auch oberhalb und unterhalb der Türschamiere oder im Bereich vor der Türverglasung nicht mehr gegen die benachbarte Türsäule abstützen kann. Das wiederum heißt, daß die sogenannte Kettenschaltung von Kraftübertragungsgliedem, wie Türsäulen und Türträgern, unterbrochen wird, so daß es im vorderen Teil des Kraftfahrzeugs in unerwünschter Weise zu stärkeren Verformungen der Fahrgastzelle kommen kann.

Bei der Konstruktion nach der gattungsbildenden GB 2144797 A wird dieser Nachteil dadurch vermieden, daß ein starr mit der Türsäule verbundener Scharnierteil unterteilt und seine beiden Teile über einen zusätzlichen, parallel zum üblichen Schamierbolzen verlaufenden Bolzen verbunden sind, der im normalen Fahrbetrieb über einen Abscherstift schwenkstarr mit beiden Teilen dieses Scharnierteils verbunden ist. Dieser Abscherstift stellt eine Solldeformationsstelle dar, die nur bei einem Aufprall des Fahrzeugs zerstört wird und dann die beiden beschriebenen Bestandteile des säulenseitigen Scharnierteils für Schwenkbewegungen relativ zu einander freigibt. Eine derartige Schwenkbewegung hat eine Verlagerung des Schamierbolzens und damit des starr mit ihm verbundenen hinteren Türendes in Richtung auf die Längsmittelebene des Fahrzeugs zur Folge. Dadurch wird dafür gesorgt, daß die oben beschriebene Kettenschaltung von Kraftübertragungsgliedem beim Aufprall erhalten bleibt.

Der Erfindung liegt die Aufgabe zugrunde, ein gattungsgemäßes Kraftfahrzeug unter Wahrung seiner Vorteile zu schaffen, bei dem die beschriebene Verlagerung des Schamierbolzens beim Aufprall ohne den Aufwand eines zusätzlichen, hinsichtlich seiner Abstimmung nicht unkritischen Abscherstifts sichergestellt ist.

Die Erfindung löst diese Aufgabe durch die in den Kennzeichen der selbständigen Patentansprüche angegebenen Merkmalskombinationen; vorteilhafte Ausbildungen der Erfindung beschreiben die Unteransprüche.

Bei der Erfindung wird also die beim Stand der Technik vorhandene Solldeformationsstelle in ohnehin vorhandene Bestandteile des Türschamiers integriert und gegebenenfalls eine Kulissenführung für den Scharnierbolzen vorgesehen, die so ausgelegt ist, daß sie beim Aufprall diesen und damit den mit ihm verbundenen vorderen Türbereich in Richtung Längsachse des Fahrzeugs bewegt.

Zur Verbesserung der Steuerbarkeit der Deformation des Türscharniers unter unterschiedlichen Aufprallbedingungen ist gemäß einer bevorzugten Ausgestaltung der Erfindung mindestens eine Solldeformationsstelle am Türscharnier oder im Bereich seiner Befestigung an der Türe und/oder an der Türsäule angeordnet, die sicherstellt, daß sich das Türscharnier stets an dieser Stelle bleibend verformt, bricht oder ausreißt, und die darüber hinaus durch eine entsprechende Gestaltung eine Steuerung der Bewegung der türseitig an die Solldeformationsstelle angrenzenden Scharnierteile und damit des vorderen Endes der Türe gestattet.

Um sicherzustellen, daß sich die geschlossene Türe auch nach einer Deformation des Türscharniers oder seiner Befestigung noch gut öffnen läßt, ist die Solldeformationsstelle bevorzugt an einem starr mit der Türsäule verbundenen Scharnierhalteteil bzw. Scharnierteil oder im Bereich der starren, gewöhnlich von einer Schweißnaht gebildeten Verbindung zwischen der Türsäule und dem karosserieseitigen Scharnierteil angeordnet. Dadurch wird sichergestellt, daß sich die Türe zum Öffnen noch um die Drehachse des Türschamier drehen läßt, während dies bei einer Anordnung der Solldeformationsstelle in einem türseitigen Scharnierteil nicht immer gewährleistet ist.

Die Solldeformationsstelle am karosserieseitigen Scharnierteil ist bevorzugt in Bezug zur Längsmittelachse jenseits, d.h. in seitlicher Richtung des Kraftfahrzeugs außerhalb der Türsäule zwischen dieser und einem Scharnierbolzen des Türschamiers angeordnet und wird zweckmäßig von einer Querschnittseinschnürung oder Materialschwächung des Scharnierteils gebildet, an der dieses Schamierteil bei einem die Deformation des Türscharniers bewirkenden Aufprall abknickt oder sich verbiegt, wobei die Querschnittseinschnürung einen Drehpunkt bildet, um den das restliche Scharnier und mit ihm der vordere Teil der Türe nach innen in Richtung der Längsmittelachse geschwenkt wird.

Alternativ kann die Solldeformationsstelle am karosserieseitigen Scharnierteil auch im Bereich einer Aufnahme für den Scharnierbolzen angeordnet sein, die beispielsweise mindestens eine durch eine dünne Materialbrücke von einer Aufnahmebohrung des Scharnierbolzens getrennte und bogenförmig oder unter einem spitzen Winkel auf die Längsmittelachse zu verlaufende Führungskulisse aufweist, in welcher sich der Schamierbolzen nach einem durch den Aufprall hervorgerufenen Bruch der Materialbrücke unter Annäherung an die Längsmittelachse verschiebt. An Stelle der von der Materialbrücke gebildeten Sollbruchstelle kann der Scharnierbolzen auch mit Preßpassung in eine Führungskulisse eingepaßt sein, bei der ein Abstand zwischen ihren gegenüberliegenden Begrenzungen kleiner als der Durchmesser des Scharnierbolzens ist, so daß sich dieser beim Aufprall unter Aufweitung der Begrenzungen entlang der Führungskulisse bewegt.

Die Solldeformationsstelle kann auch an einer Stelle angeordnet sein, an der das Türscharnier an der Türsäule befestigt ist. Da der an der Türsäule befestigte Schamierteil in der Regel angeschweißt ist, bedeutet dies, daß die zwischen der Türsäule und dem karosserieseitigen Schamierteil angeordnete Schweißnaht so angebracht werden sollte, daß bei einem Strukturversagen im Scharnierbereich eine Annäherung des vorderen Endes der Türe an die Längsmittelachse bewirkt wird. Diese Annäherung kann gemäß einer weiteren vorteilhaften Ausgestaltung der Erfindung dadurch erreicht werden, daß ein an der Türsäule angeschweißter Scharnierteil oder Scharnierhalteteil ein Winkelprofil aufweist, wobei sich der Scharnierbolzen in Fahrtrichtung vor oder neben dem vorderen Ende des mit der Türsäule verschweißten Schenkels befindet, das beim Strukturversagen, Deformation oder Aufreißen der Schweißnaht den Drehpunkt bildet. Dies kann zweckmäßig dadurch erfolgen, daß der Schenkel an einer vertikalen Schrägfläche der Türsäule angeschweißt ist, die in Fahrtrichtung unter einem Winkel von vorzugsweise mehr als 45 Grad auf die Längsmittelachse zu geneigt ist, und daß der Winkel zwischen den beiden Schenkeln und die Länge des anderen, mit der Aufnahme für den Scharnierbolzen versehenen Schenkels entsprechend auf den Neigungswinkel der Schrägfläche abgestimmt wird.

Obwohl eine Annäherung des vorderen Endes der Türe an die Längsmittelachse bei der Deformation des Türscharniers oder seiner Befestigung bevorzugt wird, weil dadurch benachbarte Flächen der Türe und der Türsäule schneller zur Anlage gebracht werden, ist es für den vorgesehenen Zweck auch ausreichend, wenn ein seitliches Ausbrechen des vorderen Teils der Türe verhindert wird, zum Beispiel, indem sich die Türe infolge der Deformation des Türscharniers beim Aufprall in Fahrtrichtung bewegt und mit einem Teil der Karosserie in Eingriff tritt, das eine seitlicher Auswärtsbewegung des vorderen Türendes blockiert.

Anstatt die Annäherung des vorderen Türendes an die Längsmittelachse bzw. die Beibehaltung seines Abstands von der Längsmittelachse durch eine gesteuerte Deformation des Türscharniers oder seiner Befestigung hervorzurufen, können auch zusätzliche Einrichtungen vorgesehen sein, die eine entsprechende Bewegung des vorderen Türendes zur Folge haben. Im einfachsten Fall sind dies an der Türe und/oder an der Türsäule angebrachte Führungseinrichtungen, welche das vordere Ende der Türe bei einer Deformation des Türschamiers oder seiner Befestigung nach innen ziehen und/oder sein Ausbrechen verhindern.

Im folgenden wird die Erfindung anhand einiger in der Zeichnung dargestellter Ausführungsbeispiele näher erläutert. Es zeigen
- Fig. 1a:: eine teilweise geschnittene Draufsicht auf ein Türscharnier eines erfindungsgemäßen Kraftfahrzeugs bei geschlossener Türe;
- Fig. 1b:: eine teilweise geschnittene Draufsicht auf das Türscharnier aus Fig. 1 nach einer Deformation des Türschamiers;
- Fig. 2a:: eine teilweise geschnittene Draufsicht auf ein weiteres erfindungsgemäßes Türscharnier;
- Fig. 2b:: eine teilweise geschnittene Draufsicht auf das Türschamier aus Fig. 2a nach einer Deformation der Befestigung des Türscharniers an der Türsäule;
- Fig. 3:: eine Draufsicht entsprechend Fig. 1 und 2 auf ein noch weiteres erfindungsgemäßes Türscharnier;
- Fig. 4:: eine Draufsicht entsprechend Fig. 1 und 2 auf ein noch anderes erfindungsgemäßes Türscharnier;
- Fig. 5:: eine teilweise geschnittene Draufsicht auf ein Türscharnier und eine das Ausbrechen des vorderen Türendes verhindernde Einrichtung eines erfindungsgemäßen Kraftfahrzeugs;
- Fig. 6a:: eine teilweise geschnittene Draufsicht auf ein Türscharnier aus dem Stand der Technik;
- Fig. 6b:: eine teilweise geschnittene Draufsicht auf das Türschamier aus Fig. 6a während einer Deformation der Türscharnierbefestigung.

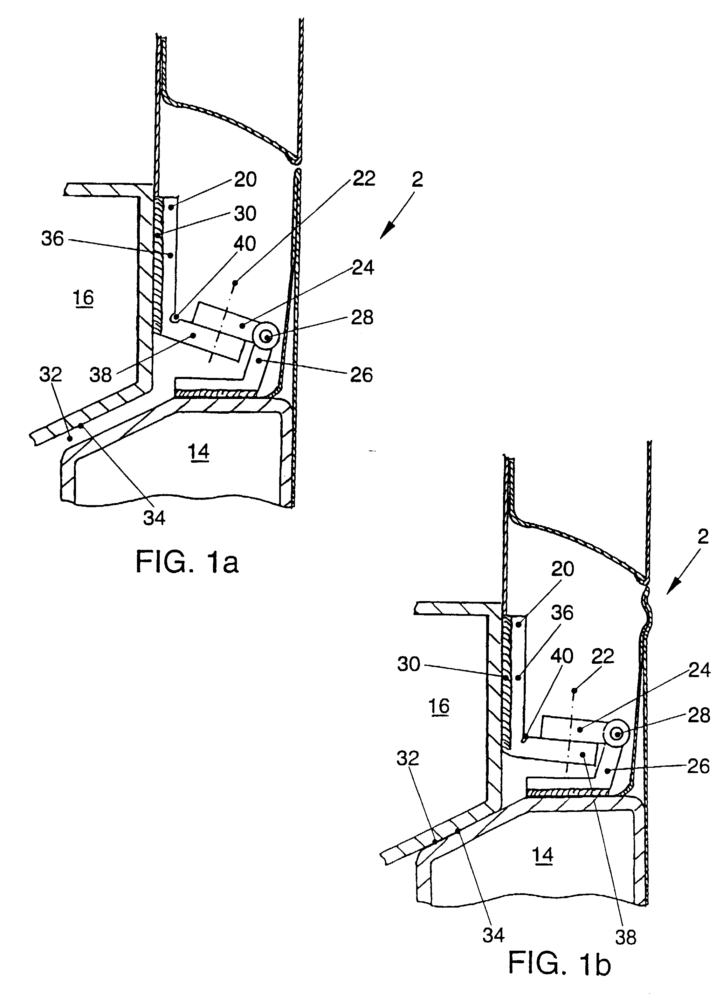

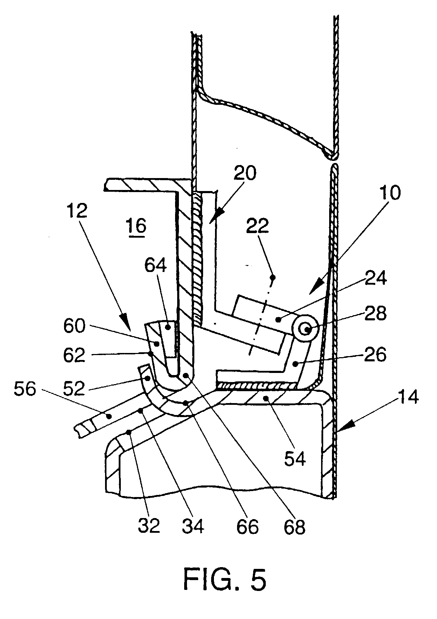

Die in den Figuren 1 bis 4 dargestellten Türschamiere 2, 4, 6, 8 und eine in Fig. 5 in Verbindung mit einem Türscharnier 10 dargestellte Führungseinrichtung 12 verhindern, daß eine an ihrem vorderen Ende über jeweils zwei der Türscharniere 2, 4, 6, 8, 10 gelenkig mit einer Türsäule 16 verbundene Türe 14 im Falle eines Aufpralls und einer dadurch verursachten Deformation der beiden Türscharniere 2, 4, 6, 8, 10 oder ihrer Befestigung im Bereich der Türscharniere 2, 4, 6, 8, 10 in seitlicher Richtung nach außen ausbricht, wie dies bei dem in Fig. 6a und 6b dargestellten herkömmlichen Türscharnier 18 der Fall ist.

Dieses herkömmliche Türscharnier 18 besteht im wesentlichen aus einem an der Türsäule 16 angebrachten Scharnierhalteteil 20 mit Winkelprofil, einem über eine Exzenterschraube 22 (nur angedeutet) starr mit dem Scharnierhalteteil 20 verbundenen karosseriefesten Scharnierteil 24, sowie einem mit der Türe 14 verschweißten Schamierteil 26 mit Winkelprofil, das über einen Scharnierbolzen 28 schwenkbar mit dem Scharnierteil 24 verbunden ist, so daß sich die Türe 14 öffnen und schließen läßt.

Bei einem Frontalaufprall oder bei einem sogenannten Offset-Aufprall des Kraftfahrzeugs übt die geschlossene Türe 14 infolge ihrer Trägheit eine in Fahrtrichtung weisende Kraft auf den Scharnierbolzen 28 aus, die gegebenenfalls in Verbindung mit einer Verformung der Türsäule 16 in rückwärtiger Richtung zu einer Beschädigung oder Zerstörung des Türscharniers 18 oder seiner Befestigung führt. Im allgemeinen deformiert die Türsäule 16 oder es reißt eine Schweißnaht 30 zwischen dem Schamierhalteteil 20 und der Türsäule 16 aus, wobei das Ausreißen der Schweißnaht 30 von deren hinterem Ende ausgeht, da dort die auftretende Kräfte und Momente am größten sind. Durch die während des Aufreißens der Schweißnaht 30 auf die Türe 14 einwirkenden Trägheitskräfte und die noch vorhandene Abstützung am vorderen Ende der Schweißnaht 30 wird das Scharnierhalteteil 20 und mit ihm das restliche Türschamier 18 und der vordere Teil der Türe 14 um einen im Bereich des vorderen Endes der Schweißnaht 30 angeordneten Drehpunkt in einer Richtung weg von einer Längsmittelachse (nicht dargestellt) des Kraftfahrzeugs nach außen verschwenkt und beschleunigt, wie durch den Pfeil M in Fig. 6b dargestellt. Dies führt zu einem seitlichen Ausbrechen des vorderen Endes der Türe 14, wobei sich im Abstand gegenüberliegende benachbarte Schrägflächen 32, 34 auf dem vorderen Ende der Türe 14 und im Bereich der Türöffnung auf der Türsäule 16 in Richtung der Pfeile P gegeneinander verschieben, so daß sie nicht zur Anlage kommen. Dies bedeutet jedoch zum einen, daß die Kräfte zwischen der Türe 14 und der Türsäule 16 weiterhin nur über das Türscharnier 18 übertragen werden, so daß es sehr schnell zu einem vollständige Abriß der Schweißnähte 30 kommt, und daß zum anderen danach weder über die Türscharniere 18 noch über die Schrägflächen 32, 34 Kräfte von der Türsäule 16 nach hinten in weiter entfernte Bereiche des Kraftfahrzeugs übertragen werden können.

Das in Fig. 1a und 1b dargestellte erfindungsgemäße Türscharnier 2 ist überwiegend identisch aufgebaut, wie das herkömmliche Türscharnier 18 und umfaßt ebenfalls ein winkelförmiges Scharnierhalteteil 20 mit zwei Schenkeln 36, 38, wobei der eine Schenkel 36 im wesentlichen parallel zur Längsmittelachse des Kraftfahrzeugs an der Türsäule 16 angeschweißt ist. Im Gegensatz zum Türscharnier 18 ist in der inneren Ecke zwischen den beiden Schenkeln 36, 38 eine Einkerbung 40 vorgesehen, die sich über die gesamte Höhe des Schamierhalteteils 20 erstreckt. Die Einkerbung 40 bildet eine Solldeformationsstelle, an der sich das Scharnierhalteteil 20 verformt, bevor es zu einem Einreißen der Schweißnaht 30 kommt. Bei der Verformung biegt sich der freie Schenkel 38 des Schamierhalteteils 20 an der Einkerbung 40 nach vorne, wobei sich der Scharnierbolzen 28 im wesentlichen in Fahrtrichtung bewegt, so daß das vordere Ende der Türe 14 nicht nach außen ausbricht, bevor die benachbarten Schrägflächen 32, 34 auf dem vorderen Ende der Türe 14 und auf der Türsäule 16 zur Anlage kommen (Fig. 1b). Von da an wirken diese Flächen 32, 34 als Kraftübertragungsflächen, an denen die Kräfte zwischen der Türsäule 16 und der Türe 14 übertragen werden, so daß das Türschamier 2 entlastet und nicht weiter verformt wird.

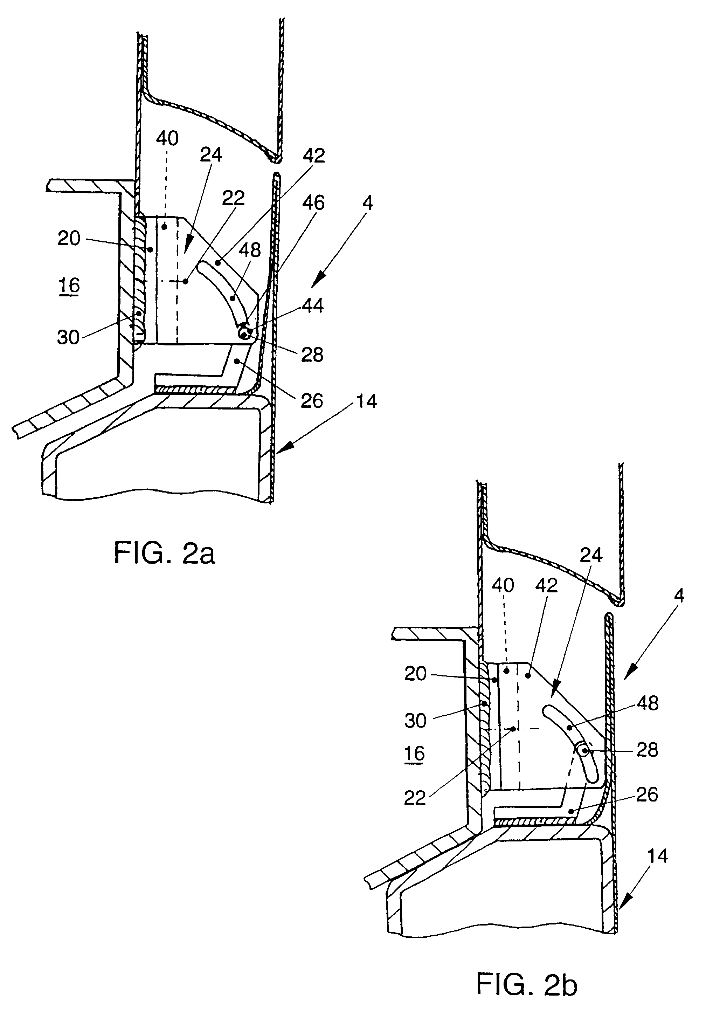

Bei dem in Fig. 2a und b dargestellten Türschamier 4 ist das parallel zur Längsmittelachse des Kraftfahrzeugs an der Türsäule 16 festgeschweißte Scharnierhalteteil 20 eine flache Platte, an der das karosseriefeste Scharnierteil 24 über eine Exzenterschraube 22 angeschraubt ist. Das Scharnierteil 24 weist einen nach außen offenen U-förmigen Querschnitt auf und besteht aus einem gegen das Scharnierhalteteil 20 anliegenden und mit einer Bohrung für die Exzenterschraube 22 versehenen ebenen Joch 40 und zwei horizontalen ebenen Seitenwangen 42, die am oberen und unteren Ende des Jochs 40 nach außen überstehen. Beide Seitenwangen 42 weisen in der Nähe ihres hinteren Randes eine Aufnahmebohrung 44 für den Scharnierbolzen 28 auf, der zwischen den Seitenwangen 42 eine zylindrische Aufnahme im türfesten Scharnierteil 26 durchsetzt. Die fluchtenden Aufnahmebohrungen 44 in der oberen und unteren Seitenwange 42 sind jeweils durch eine schmale stegförmige Materialbrücke 46 von übereinander in den Seitenwangen 42 angeordneten Kulissenführungen 48 getrennt, die sich der Türsäule 16 in Fahrtrichtung bogenförmig nähern und damit auf die Längsmittelachse des Kraftfahrzeugs zu gerichtet sind. Die Materialbrücken 46 bilden Sollbruchstellen, die bei einer aufprallbedingten Deformation des Türscharniers 4 zuerst nachgeben, so daß das obere und untere Ende des Scharnierbolzens 28 in die Kulissenführungen 48 eintreten und sich in diesen nach vome und innen bewegen, wie in Fig. 2b dargestellt. Dadurch werden das türfeste Scharnierteil 26 und das vordere Ende der Türe 14 etwas nach innen gezogen, so daß die benachbarten Schrägflächen 32, 34 früher zur Anlage kommen.

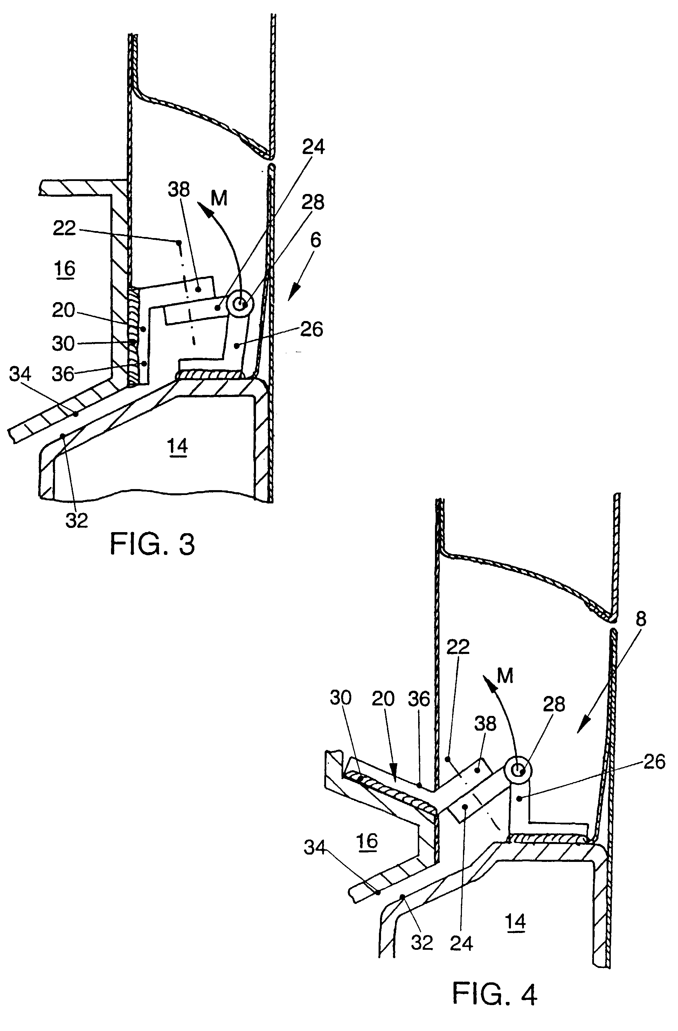

Bei dem in Fig. 3 dargestellten Türscharnier 6 wird die Deformation der Türsäule unter Belastung zur Stabilisierung der Tür im Türausschnitt genutzt. Im Unterschied zum herkömmlichen Türschamier 18 ist jedoch das winkelförmige Scharnierhalteteil 20 so festgeschweißt, daß der mit der Türsäule 16 verschweißte Schenkel 36 nach hinten weist, so daß der Scharnierbolzen 28 im wesentlichen neben dem vorderen Ende der Schweißnaht 30 liegt, das bei der Deformation der Türsäule den Drehpunkt bildet, um den der Schamierbolzen 28 verschwenkt wird. Das bedeutet jedoch, daß der Schamierbolzen 28 und damit das vordere Ende der Türe 14 beim Ausreißen der Schweißnaht 30 in Richtung des Pfeils M in Fig. 3 und damit nach innen in Richtung zur Längsmittelachse des Kraftfahrzeugs hin beschleunigt wird, bis kurz darauf die benachbarten Flächen 32, 34 zur Anlage kommen.

Bei dem in Fig. 4 dargestellten Türscharnier 8 ist der Scharnierbolzen 28 ebenfalls neben dem vorderen Ende der Schweißnaht 30 angeordnet, so daß er bei der Deformation der Türsäule 16 in Richtung des Pfeils M schwingt und das vordere Ende der Türe 14 nach innen zieht. Die Anordnung des Schamierbolzens 28 neben dem vorderen Ende der Schweißnaht 30 wird dort dadurch erreicht, daß der Schenkel 36 des winkelförmigen Scharnierhalteteils 20 auf einer in Fahrtrichtung unter einem Winkel zur Längsmittelachse hin geneigten Fläche der Türsäule 16 festgeschweißt ist.

Während die in Fahrtrichtung auf die Längsmittelachse des Kraftfahrzeugs zu gerichtete Bewegung des vorderen Türendes infolge einer Deformation des Türscharniers 2, 4 selbst oder einer Befestigung des Türschamiers 6, 8 bei den vorangehend beschriebenen Ausführungsbeispielen durch die Konstruktion des Türscharniers oder seiner Befestigung bewirkt wird, wird diese Bewegung bei dem in Fig. 5 dargestellten Ausführungsbeispiel durch die von den Türscharnieren 10 unabhängige getrennte Führungseinrichtung 12 bewirkt. Diese Führungseinrichtung 12 besteht im wesentlichen aus einer aus der Türe 14 heraus nach vorne gebogenen Zunge 52, die zwischen den beiden übereinander liegenden Türscharnieren 10 mit herkömmlicher Konstruktion angeordnet ist. Die Zunge 52 ist aus einem vorderen Türholm 54 der Türe 14 ausgestanzt und greift bei geschlossener Türe 14 durch eine Ausnehmung 56 ins Innere der Türsäule 16 ein und hintergreift die scharnierseitige Wand der Türsäule 16, so daß sie bei einer Zerstörung der Türscharniere 10 ein seitliches Ausbrechen des vorderen Endes der Türe 14 verhindert. Um das vordere Ende der Türe 14 darüberhinaus in Richtung der Längsmittelachse zu ziehen, so daß die benachbarten Flächen 32, 34 schneller zur Anlage kommen, ist eine bei der Herstellung der Ausnehmung 56 in der Türsäule 16 auf drei Seiten ausgestanzte Lasche 60 so durch die Ausnehmung 56 ins Innere der Türsäule 16 hineingebogen, daß sie eine schräg nach innen weisende Auflauffläche 62 für die aus dem Türholm 54 überstehende Zunge 52 bildet. Um die Lasche 60 trotz der bei einer Deformation der Türscharniere 10 darauf einwirkenden Kräfte in ihrer Lage zu halten, stützt sie sich über zwei oder mehr ausgestanzte und umgebogene schräge Nasen 64 gegen die Innenseite der Türsäule 16 ab.

Die Zunge 52 ist kreisbogenförmig gekrümmt, und liegt mit ihrer in Fahrtrichtung weisenden Vorderseite 66 einem ebenfalls kreisbogenförmig gekrümmten Fußteil 68 der Lasche 60 mit kleinerem Krümmungsradius gegenüber, so daß sie bei einer Zerstörung der Türscharniere 10 ein Hilfsscharnier bilden, das ein Öffnen der Türe 14 gestattet.

An Stelle einer aus dem Türholm 54 ausgestanzten Zunge 52 kann die Führungseinrichtung beispielsweise auch einen massiven Dorn (nicht dargestellt) umfassen, der am Türholm 54 festgeschweißt ist und wie die Zunge 52 so in eine Ausnehmung 56 der Türsäule 16 eingreift, daß er das Öffnen und Schließen der Türe 14 nicht behindert. Das vordere Ende des Dorns kann kegelstumpfförmig ausgebildet sein, um den Dorn im Zusammenwirken mit einer schrägen Auflauffläche 62 der Türsäule 16 zusammen mit dem vorderen Ende der Türe 14 nach innen zu ziehen. Eine derartige oder ähnliche Führungseinrichtung kann sowohl zusammen mit herkömmlichen Türscharnieren 18 als auch in Verbindung mit den in den Figuren 1 bis 5 dargestellten Türscharnieren 2, 4, 6, 8 Verwendung finden.

Die Zunge 52, der Dorn oder ein anderes über das vordere Ende der Türe 14 überstehendes Element kann alternativ auch kürzer ausgebildet werden, so daß es erst bei der Deformation der Türschamiere 10 oder ihrer Befestigung und der dadurch hervorgerufenen Vorwärtsbewegung der Türe 14 mit der Türsäule 16 in Eingriff tritt und diese dabei auf ihrer Innenseite hintergreift, um ein Ausbrechen des vorderen Endes der Türe 14 zu verhindern.

## Patentansprüche

1. Kraftfahrzeug mit einer Sicherheitskarosserie und Seitentüren, von denen jede über mindestens ein Türscharnier mit einem Scharnierbolzen gelenkig an einer Türsäule der Sicherheitskarosserie befestigt ist und bei einem Aufprall des Kraftfahrzeugs in eine Frontpartie der Sicherheitskarosserie eingeleitete und von dort auf die Türsäule übertragene Kräfte in weiter vom Aufprallort entfernte Karosseriebereiche weiterleitet, wenn sie geschlossen bleibt und sich im Bereich des Türschamiers ohne seitliches Ausbrechen gegen die benachbarte Türsäule abstützt, wobei dem Türscharnier (2, 4, 6, 8,10) eine Solldeformationsstelle (40) zugeordnet ist zur Verlagerung des Scharnierbolzens (28) und eines mit diesem verbundenen vorderen Teils der Tür (14) beim Aufprall in Richtung auf eine Längsmittelachse des Kraftfahrzeugs, dadurch gekennzeichnet, daß die Solldeformationsstelle von einer Querschnittseinschnürung oder Materialschwächung (40) eines starr mit der Türsäule (16) verbundenen Scharnierteils (24) oder Scharnierhalteteils (20) oder seiner starren Verbindung (Schweißnaht 30) gebildet ist.

2. Kraftfahrzeug nach Anspruch 1, dadurch gekennzeichnet, daß die Querschnittseinschnürung oder Materialschwächung (40) im Bereich der inneren Ecke des winkelförmigen Scharnierteils oder Scharnierhalteteils (20) angeordnet ist, dessen einer Schenkel (36) mit der Türsäule (16) verschweißt ist und dessen anderer Schenkel (38) nach außen übersteht.

3. Kraftfahrzeug nach Anspruch 1 oder 2, dadurch gekennzeichnet, daß die Solldeformationsstelle im Bereich einer Schweißnaht (30) zwiscnen der Türsäule (16) und einem mit dieser verschweißten Schamierteil oder Schamierhalteteil (20) angeordnet ist.

4. Kraftfahrzeug nach Anspruch 3, dadurch gekennzeichnet, daß vor oder neben dem vorderen Ende der Schweißnaht (30) ein Schamierbolzen (28) des Türscharniers (6, 8) angeordnet ist

5. Kraftfahrzeug nach Anspruch 3 oder 4, dadurch gekennzeichnet, daß die Schweißnaht (30) an einer Anlagefläche zwischen der Türsäule (16) und dem Schamierteil oder Schamierhalteteil (20) angeordnet ist und daß die Anlagefläche in Fahrtrichtung auf die Längsmittelachse zu geneigt ist.

6. Kraftfahrzeug mit einer Sicherheitskarosserie und Seitentüren, von denen jede über mindestens ein Türscharnier mit einem Scharnierbolzen gelenkig an einer Türsäule der Sicherheitskarosserie befestigt ist und bei einem Aufprall des Kraftfahrzeugs in eine Frontpartie der Sicherheitskarosserie eingeleitete und von dort auf die Türsäule übertragene Kräfte in weiter vom Aufprallort entfernte Karosseriebereiche weiterleitet, wenn sie geschlossen bleibt und sich im Bereich des Türscharniers ohne seitliches Ausbrechen gegen die benachbarte Türsäule abstützt, wobei dem Türscharnier (2, 4, 6, 8, 10) Mittel (48) zugeordnet sind zur Verlagerung des Scharnierbolzens (28) und eines mit diesem verbundenen vorderen Teils der Tür (14) beim Aufprall in Richtung auf eine Längsmittelachse des Kraftfahrzeugs, dadurch gekennzeichnet, daß die Mittel eine derart ausgelegte Kulissenführung (48) für den Scharnierbolzen (28) enthalten, daß bei aufprallbedingter Deformation einer Solldeformationsstelle (30, 40, 46) des Türscharniers (2, 4, 6, 8, 10) oder seiner Befestigung (30) die Verlagerung des Scharnierbolzens (28) zusammen mit einem starr mit der Tür (14) verbundenen Schamierteils (26) erfolgt.

7. Kraftfahrzeug nach einem der Ansprüche 1 bis 5 oder nach Anspruch 6, gekennzeichnet durch ein am vorderen Ende der Tür (14) angeordnetes Element (52), das bei geschlossener Tür (14) einen Teil der Türsäule (16) auf dessen Innenseite hintergreift.

8. Kraftfahrzeug nach einem der Ansprüche 1 bis 5 oder nach einem der Ansprüche 6 oder 7, dadurch gekennzeichnet, daß die Deformation des Türschamiers (2, 4, 6, 8, 10) oder seiner Befestigung (30) ein am vorderan Ende der Tür (14) angeordnetes Element mit einem Teil der Türsäule (16) in Eingriff bringt, so daß es diesen auf seiner Innenseite hintergreift.

## Claims

1. Motor vehicle with a safety body and side doors, each of which is secured in an articulated manner on a doorpost of the safety body by means of at least one door hinge with a hinge pin and passes on forces introduced into a front section of the safety body and transmitted from there to the doorpost when the motor vehicle is involved in a collision into areas of the body that are further away from the location of impact if it remains closed and is supported against the adjacent doorpost in the region of the door hinge without breaking out sideways, the door hinge (2, 4, 6, 8, 10) being assigned a predetermined deformation point (40) for the displacement of the hinge pin (28) and of a front part, connected to the latter, of the door (14) upon impact in the direction of a longitudinal centre line of the motor vehicle, characterized in that the predetermined deformation point is formed by a reduction in cross section or weakening of material (40) of a hinge part (24) or hinge-holding part (20) connected rigidly to the doorpost (16) or of its rigid joint (weld 30).

2. Motor vehicle according to Claim 1, characterized in that the reduction in cross section or weakening of material (40) is arranged in the region of the inner corner of the angled hinge part or hinge-holding part (20), one limb (36) of which is welded to the doorpost (16) and the other limb (38) of which protrudes outwards.

3. Motor vehicle according to Claim 1 or 2, characterized in that the predetermined deformation point is arranged in the region of a weld (30) between the doorpost (16) and a hinge part or hinge-holding part (20) welded to the latter.

4. Motor vehicle according to Claim 3, characterized in that a hinge pin (28) of the door hinge (6, 8) is arranged in front of or next to the front end of the weld (30).

5. Motor vehicle according to Claim 3 or 4, characterized in that the weld (30) is arranged at a contact surface between the doorpost (16) and the hinge part or hinge-holding part (20) and in that the contact surface slopes towards the longitudinal centre line in the direction of travel.

6. Motor vehicle with a safety body and side doors, each of which is secured in an articulated manner on a doorpost of the safety body by means of at least one door hinge with a hinge pin and passes on forces introduced into a front section of the safety body and transmitted from there to the doorpost when the motor vehicle is involved in a collision into areas of the body that are further away from the location of impact if it remains closed and is supported against the adjacent doorpost in the region of the door hinge without breaking out sideways, the door hinge (2, 4, 6, 8, 10) being assigned means (48) for the displacement of the hinge pin (28) and of a front part, connected to the latter, of the door (14) upon impact in the direction of a longitudinal centre line of the motor vehicle, characterized in that the means comprise a slotted guide (48) for the hinge pin (28) that is designed in such a way that when deformation of a predetermined deformation point (30, 40, 48) of the door hinge (2, 4, 6, 8, 10) or of its fixing (30) caused by impact occurs, the displacement of the hinge pin (28) takes place together with a hinge part (26) connected rigidly to the door (14).

7. Motor vehicle according to one of Claims 1 to 5 or according to Claim 6, characterized by an element (52) which is arranged at the front end of the door (14) and reaches behind a part of the doorpost (16), on the inside of the latter, when the door (14) is closed.

8. Motor vehicle according to one of Claims 1 to 5 or according to one of Claims 6 or 7, characterized in that the deformation of the door hinge (2, 4, 6, 8, 10) or of its fixing (30) brings an element arranged at the front end of the door (14) into engagement with a part of the doorpost (16), with the result that it reaches behind the latter on its inside.

## Revendications

1. Véhicule automobile équipé d'une carrosserie de sécurité et de portes latérales, dont chacune est fixée par articulation à un montant de porte de la carrosserie de sécurité avec un axe de charnière par l'intermédiaire d'au moins une charnière de porte, et dont chacune, lors d'un choc du véhicule automobile, retransmet des forces introduites dans une partie frontale de la carrosserie de sécurité et transmises à partir de là sur le montant de la porte dans des zones de la carrosserie plus éloignées du point de choc si elle reste fermée, et si au niveau de la charnière de porte elle prend appui contre le montant de la porte voisine sans être arrachée latéralement, une section de déformation prédéterminée (40) étant associée à la charnière (2, 4, 6, 8, 10) de porte afin de déplacer lors du choc l'axe (28) de charnière, et une partie avant de la porte (14) reliée à ce dernier, en direction d'un axe médian longitudinal du véhicule automobile, caractérisé en ce que la section de déformation prédéterminée est formée par un rétrécissement de section transversale ou un affaiblissement de matériau (40) d'un élément (24) de charnière ou d'un élément de retenue (20) de charnière relié rigidement au montant (16) de porte, ou de sa liaison rigide (cordon de soudure 30).

2. Véhicule automobile selon la revendication 1, caractérisé en ce que le rétrécissement de section transversale ou l'affaiblissement de matériau (40) est disposé au niveau du coin intérieur de l'élément de charnière ou de l'élément de retenue (20) de charnière de forme angulaire, dont l'une des branches (36) est soudée sur le montant (16) de porte, et dont l'autre branche (38) dépasse vers l'extérieur.

3. Véhicule automobile selon la revendication 1 ou 2, caractérisé en ce que la section de déformation prédéterminée est disposée au niveau d'un cordon de soudure (30) entre le montant (16) de porte et un élément de charnière ou un élément de retenue (20) de charnière soudé sur celui-ci.

4. Véhicule automobile selon la revendication 3, caractérisé en ce qu'un axe (28) de charnière de la charnière (6, 8) de porte est disposé en amont ou à côté de l'extrémité avant du cordon de soudure (30).

5. Véhicule automobile selon la revendication 3 ou 4, caractérisé en ce que le cordon de soudure (30) est disposé sur une surface d'appui entre le montant (16) de porte et l'élément de charnière ou l'élément de retenue (20) de charnière, et en ce que, dans le sens de la marche, la surface d'appui est inclinée vers l'axe médian longitudinal.

6. Véhicule automobile équipé d'une carrosserie de sécurité et de portes latérales, dont chacune est fixée par articulation à un montant de porte de la carrosserie de sécurité avec un axe de charnière par l'intermédiaire d'au moins une charnière de porte, et qui, lors d'un choc du véhicule automobile, retransmet des forces introduites dans une partie frontale de la carrosserie de sécurité et transmises à partir de là sur le montant de la porte dans des zones de la carrosserie plus éloignées du point de choc si elle reste fermée, et si au niveau de la charnière de porte elle prend appui contre le montant de la porte voisine sans être arrachée latéralement, des moyens (48) étant associés à la charnière (2, 4, 6, 8, 10) de porte afin de déplacer lors du choc l'axe (28) de charnière, et une partie avant de la porte (14) reliée à ce dernier, en direction d'un axe médian longitudinal du véhicule automobile, caractérisé en ce que les moyens comportent des guidages à coulisse (48) pour l'axe (28) de charnière, qui sont conçus de telle sorte que, lors d'une déformation due à un choc d'une section de déformation prédéterminée (30, 40, 46) de la charnière (2, 4, 6, 8, 10) de porte ou de sa fixation (30), le déplacement de l'axe (28) de charnière soit effectué en commun avec un élément (26) de charnière relié rigidement à la porte (14).

7. Véhicule automobile selon l'une quelconque des revendications 1 à 5 ou selon la revendication 6, caractérisé par un élément (52) disposé sur l'extrémité avant de la porte (14) qui, à l'état fermé de la porte (14), passe derrière une partie du montant (16) de porte sur la face intérieure de ce dernier.

8. Véhicule automobile selon l'une quelconque des revendications 1 à 5 ou selon l'une des revendications 6 et 7, caractérisé en ce que la déformation de la charnière (2, 4, 6, 8, 10) de porte ou de sa fixation (30) met en contact un élément disposé sur l'extrémité avant de la porte (14) avec une partie du montant (16) de porte, de sorte qu'il passe derrière celle-ci sur sa face intérieure.
